(19) **Europäisches Patentamt**
**European Patent Office**
**Office européen des brevets**

(11) **EP 4 456 669 A1**

(12) **EUROPEAN PATENT APPLICATION**
published in accordance with Art. 153(4) EPC

(43) Date of publication:
**30.10.2024 Bulletin 2024/44**

(21) Application number: **22911602.5**

(22) Date of filing: **04.11.2022**

(51) International Patent Classification (IPC):
**H05B 6/12** *(2006.01)*     **H05B 6/06** *(2006.01)*
**G06N 3/04** *(2023.01)*

(52) Cooperative Patent Classification (CPC):
**G06N 3/04; H05B 6/06; H05B 6/12**

(86) International application number:
**PCT/KR2022/017196**

(87) International publication number:
**WO 2023/120964 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 KR 20210186992**

(71) Applicant: **LG Electronics Inc.**
**Yeongdeungpo-gu**
**Seoul 07336 (KR)**

(72) Inventors:
• **SEONG, Hojae**
**Seoul 08592 (KR)**
• **OH, Dooyong**
**Seoul 08592 (KR)**
• **OK, Seungbok**
**Seoul 08592 (KR)**
• **PARK, Byeongwook**
**Seoul 08592 (KR)**

(74) Representative: **Vossius & Partner**
**Patentanwälte Rechtsanwälte mbB**
**Siebertstrasse 3**
**81675 München (DE)**

(54) **INDUCTION HEATING-TYPE COOKTOP**

(57)     The present disclosure is intended to provide an induction heating type cooktop that determines whether a cooking vessel is boiling regardless of various variables such as an amount of water and vessel material, comprises an upper plate part on which a cooking vessel is placed, a working coil configured to generate a magnetic field passing through the cooking vessel, an inverter configured to supply current to the working coil, a sensor configured to detect a temperature of the cooking vessel, and a controller configured to determine whether the cooking vessel is boiling, wherein the controller is configured to determine whether the cooking vessel is boiling by applying input data obtained from the sensor and the inverter to a boiling prediction model.

[Figure 6]

**EP 4 456 669 A1**

## Description

[Technical Field]

This disclosure relates to an induction heating type cooktop. More specifically, it relates to an induction heating type cooktop that determines whether water in a cooking vessel is boiling.

[Background Art]

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

These cooktops may be equipped with a function that determines whether the water in the cooking vessel is boiling and outputs a notification. Conventional cooktops detect the vibration of the cooking vessel to determine whether the water is boiling, but in this case, there is a problem that accuracy is lowered depending on various environmental variables such as the material of the cooking vessel and the amount of water.

[Disclosure]

[Technical Problem]

The present disclosure seeks to provide an induction heating type cooktop that determines whether a cooking vessel is boiling regardless of various variables such as the amount of water and the vessel material.

The present disclosure seeks to provide an induction heating type cooktop that determines whether a cooking vessel is boiling without adding a separate sensor.

[Technical Solution]

The induction heating type cooktop according to an embodiment of the present disclosure can output a notification when water in the cooking vessel boils by applying a neural network model.

The induction heating type cooktop according to an embodiment of the present disclosure can collect various variables and preprocess them to learn a deep neural network that can determine whether a cooking vessel is boiling.

The induction heating type cooktop according to an embodiment of the present disclosure comprises an upper plate part on which a cooking vessel is placed, a working coil configured to generate a magnetic field passing through the cooking vessel, an inverter configured to supply current to the working coil, a sensor configured to detect a temperature of the cooking vessel, and a controller configured to determine whether the cooking vessel is boiling, wherein the controller is configured to determine whether the cooking vessel is boiling by applying input data obtained from the sensor and the inverter to a boiling prediction model.

The boiling prediction model is implemented with a Deep Neural Network (DNN).

The controller is configured to use the boiling prediction model when a heating time exceeds a preset threshold time.

The controller is configured to obtain a boiling probability output when the input data is input to the boiling prediction model.

The controller is configured to determine whether the cooking vessel is boiling by comparing the boiling probability with a preset reference probability.

The controller is configured to output a boiling notification of the cooking vessel if the boiling probability exceeds the reference probability.

The controller is configured to determine whether the cooking vessel is boiling using load impedance if a heating time exceeds a preset reference time.

The controller is configured to output a boiling notification of the cooking vessel if the heating time exceeds the reference time and a gradient for each section of the load impedance is less than a predetermined gradient.

The controller is configured to determine whether the cooking vessel is boiling by comparing the boiling probability with a preset reference probability if the heating time is less than the reference time.

The input data includes a temperature of the cooking vessel sensed by the sensor, an operating frequency of the inverter, and data related to load impedance.

The induction heating type cooktop further comprises an output interface configured to output a notification when it is determined that the cooking vessel is boiling.

[Advantageous Effects]

According to an embodiment of the present disclosure, there is an advantage that an accuracy of determining a boiling of a cooking vessel is improved by using a boiling prediction model implemented with a deep neural network.

According to an embodiment of the present disclosure, there is an advantage in that the boiling of a cooking vessel can be determined regardless of the vessel material and the amount of water.

According to an embodiment of the present disclosure, the boiling of a cooking vessel can be determined using variables obtained from an existing sensor and inverter without adding a separate sensor, so the structure can be simplified and reliability is improved.

According to an embodiment of the present disclosure, it is possible to increase user convenience by notifying whether the cooking vessel is boiling or a timing when food is dropped.

[Description of Drawings]

FIG. 1 is a perspective view showing a cooktop and a cooking vessel according to an embodiment of the present disclosure.

FIG. 2 is a cross-sectional view of a cooktop and a cooking vessel according to an embodiment of the present disclosure.

FIG .3 is a diagram illustrating a circuit diagram of a cooktop according to an embodiment of the present disclosure.

FIG. 4 is a diagram showing output characteristics of a cooktop according to an embodiment of the present disclosure.

FIG. 5 is a control block diagram of an induction heating type cooktop according to an embodiment of the present disclosure.

Fig. 6 is a flow chart illustrating a method of determining whether a cooking vessel is boiling in an induction heating type cooktop according to an embodiment of the present disclosure.

FIG. 7 is a schematic diagram of a boiling prediction model according to an embodiment of the present disclosure.

FIG. 8 is a flowchart showing a method of operating a boiling prediction model according to an embodiment of the present disclosure.

FIG. 9 is a diagram illustrating an example of data used in a boiling prediction model according to an embodiment of the present disclosure.

[Best Mode]

Hereinafter, embodiments related to the present disclosure will be described in more detail with reference to the drawings. The suffixes "module" and "part" for components used in the following description are given or used interchangeably only for the ease of preparing the specification, and do not have distinct meanings or roles in themselves.

Hereinafter, an induction heating type cooktop and its operating method according to an embodiment of the present disclosure will be described. For convenience of explanation, "induction heating type cooktop" is referred to as "cooktop."

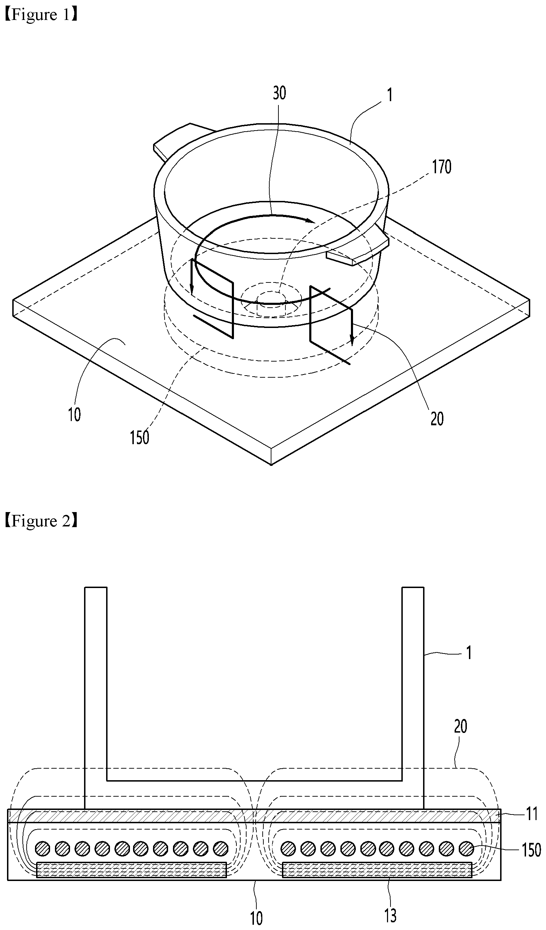

FIG. 1 is a perspective view showing a cooktop and a cooking vessel according to an embodiment of the present disclosure and FIG. 2 is a cross-sectional view of a cooktop and a cooking vessel according to an embodiment of the present disclosure.

The cooking vessel 1 may be located at the top of the cooktop 10, and the cooktop 10 may heat the cooking vessel 1 located at the top.

First, a method by which the cooktop 10 heats the cooking vessel 1 will be described.

As shown in FIG. 1, the cooktop 10 may generate a magnetic field 20 such that at least a portion thereof passes through the cooking vessel 1. At this time, if the material of the cooking vessel 1 contains an electrical resistance component, the magnetic field 20 may induce an eddy current 30 in the cooking vessel 1. This eddy current 30 generates heat in the cooking vessel 1 itself, and this heat is conducted or radiated to the inside of the cooking vessel 1, so that the contents of the cooking vessel 1 can be cooked.

On the other hand, if the material of the cooking vessel 1 does not contain an electrical resistance component, the eddy current 30 does not occur. Therefore, in this case, the cooktop 10 cannot heat the cooking vessel 1.

Accordingly, the cooking vessel 1 that can be heated by the cooktop 10 may be a stainless steel vessel or a metal vessel including an enamel or cast iron vessel.

Next, a method by which the cooktop 10 generates the magnetic field 20 will be described.

As shown in FIG. 2, the cooktop 10 may include at least one of an upper plate part 11, a working coil 150, and a ferrite core 13.

The upper plate part 11 is where the cooking vessel 1 is placed and can support the cooking vessel 1. That is, the cooking vessel 1 may be placed on the upper surface of the upper plate part 11. A heating area in which the cooking vessel 1 is heated may be formed in the upper plate part 11.

Additionally, the upper plate part 11 may be formed of tempered glass made of ceramic material synthesized from various minerals. Accordingly, the upper plate part 11 can protect the cooktop 10 from external shocks, etc.

Additionally, the upper plate part 11 can prevent foreign substances such as dust from entering the cooktop 10.

The working coil 150 may be located below the upper plate part 11. This working coil 150 may or may not be supplied with current to generate the magnetic field 20. Specifically, current may or may not flow in the working coil 150 depending on whether the internal switching element of the cooktop 10 is turned on or off.

A magnetic field 20 is generated when current flows through the working coil 150, and this magnetic field 20 may meet the electrical resistance component contained in the cooking vessel 1 to generate an eddy current 30. The eddy current heats the cooking vessel 1, so that the contents of the cooking vessel 1 can be cooked.

Additionally, the heating power of the cooktop 10 may be adjusted depending on the amount of current flowing through the working coil 150. As a specific example, the greater the current flowing through the working coil 150, the greater the magnetic field 20 is generated. Accordingly, the magnetic field passing through the cooking vessel 1 increases, thereby increasing the heating power of the cooktop 10.

The ferrite core 13 is a component that protects the internal circuit of the cooktop 10. Specifically, the ferrite core 13 serves as a shield to block the influence of the magnetic field 20 generated from the working coil 150 or an externally generated electromagnetic field on the internal circuit of the cooktop 10.

To this end, the ferrite core 13 may be formed of a material with very high permeability. The ferrite core 13 serves to guide the magnetic field flowing into the cooktop 10 to flow through the ferrite core 13 rather than being radiated. The movement of the magnetic field 20 generated in the working coil 150 by the ferrite core 13 may be as shown in FIG. 2.

Meanwhile, the cooktop 10 may further comprises another components in addition to the upper plate part 11, the working coil 150, and the ferrite core 13 described above. For example, the cooktop 10 may further comprises an insulating material (not shown) located between the upper plate part 11 and the working coil 150. That is, the cooktop according to the present disclosure is not limited to the cooktop 10 shown in FIG. 2.

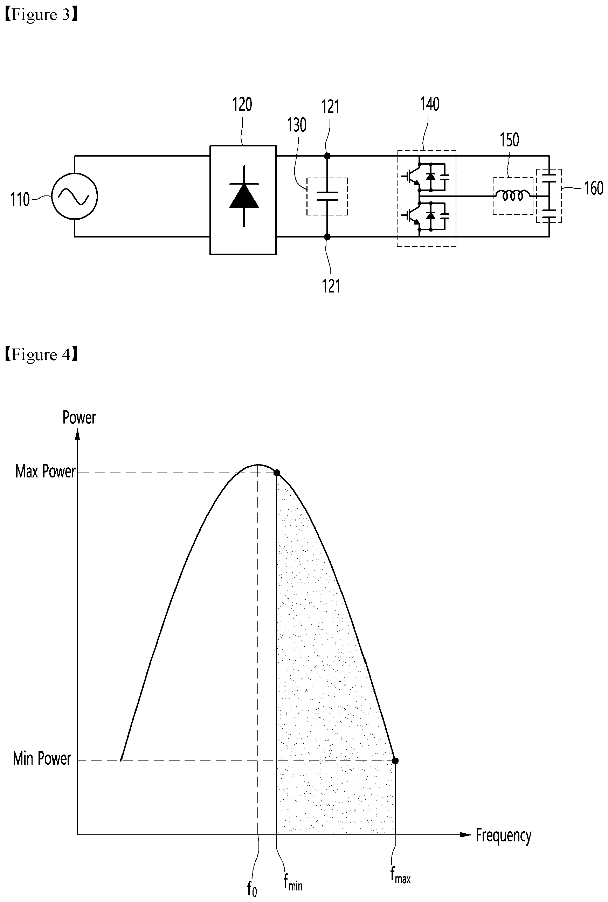

FIG.3 is a diagram illustrating a circuit diagram of a cooktop according to an embodiment of the present disclosure.

Since the circuit diagram of the cooktop 10 shown in FIG. 3 is merely an example for convenience of explanation, the present disclosure is not limited thereto.

Referring to FIG. 3, the induction heating type cooktop comprises at least one of the power supply part 110, rectifier 120, DC link capacitor 130, inverter 140, working coil 150 or resonance capacitor 160.

The power supply part 110 can receive external power input. The power that the power supply unit 110 receives from the outside may be AC (Alternation Current) power.

The power supply part 110 may supply alternating current voltage to the rectifier unit 120.

The rectifier 120 is an electrical device for converting alternating current to direct current. The rectifier 120 converts the alternating current voltage supplied through the power supply part 110 into direct current voltage.

The output terminal of the rectifier 120 may be connected to DC both ends 121. The DC both ends 121 output through the rectifier 120 can be referred to as a DC link. The voltage measured at DC both ends 121 is called the DC link voltage.

The DC link capacitor 130 serves as a buffer between the power supply part 110 and the inverter 140. Specifically, the DC link capacitor 130 is used to maintain the DC link voltage converted through the rectifier 120 and supply it to the inverter 140.

The inverter 140 serves to switch the voltage applied to the working coil 150 so that a high-frequency current flows in the working coil 150. The inverter 140 may include a semiconductor switch, and the semiconductor switch may be an IGBT (Insulated Gate Bipolar Transistor) or WBG (Wide Band Gab) device, but this is only an example and is not limited thereto. Meanwhile, the WBG device may be SiC (Silicon Carbide) or GaN (Gallium Nitride), etc. The inverter 140 drives a semiconductor switch to cause a high-frequency current to flow in the working coil 150, thereby forming a high-frequency magnetic field in the working coil 150.

Current may or may not flow in the working coil 150 depending on whether the switching element is driven. When current flows through the working coil 150, a magnetic field is generated. The working coil 150 can heat the cooking vessel by generating a magnetic field as current flows.

One side of the working coil 150 is connected to the connection point of the switching elements of the inverter 140, and the other side is connected to the resonance capacitor 160.

The switching elements is driven by a driving part (not shown), and is controlled by the switching time output from the driving part, so that the switching elements operate alternately and apply a high-frequency voltage to the working coil 150. And, because the on/off time of the switching elements applied from the driving part (not shown) is controlled in a gradually compensated manner, the voltage supplied to the working coil 150 changes from a low voltage to a high voltage.

The resonance capacitor 160 may be a component that functions as a buffer. The resonant capacitor 160 controls the saturation voltage rise rate during turn-off of the switching elements, thereby affecting energy loss during the turn-off time.

In the case of the cooktop 10 configured with the circuit diagram shown in FIG. 3, the resonance frequency is determined by the inductance value of the working coil 150 and the capacitance value of the resonance capacitor 160. Then, a resonance curve is formed around the determined resonance frequency, and the resonance curve can represent the output power of the cooktop 10 according to the frequency band.

Next, FIG. 4 is a diagram showing output characteristics of a cooktop according to an embodiment of the present disclosure.

First, the Q factor (quality factor) may be a value indicating the sharpness of resonance in a resonant circuit. Accordingly, in the case of the cooktop 10, the Q factor is determined by the inductance value of the working coil 150 included in the cooktop 10 and the capacitance value of the resonance capacitor 160. The resonance curve is different depending on the Q factor. Accordingly, the cooktop 10 has different output characteristics depending on the inductance value of the working coil 150 and the capacitance value of the resonance capacitor 160.

FIG. 4 shows an example of a resonance curve according to Q factor. In general, the larger the Q factor, the sharper the shape of the curve, and the smaller the Q factor, the broader the shape of the curve.

The horizontal axis of the resonance curve may represent frequency, and the vertical axis may represent output power. The frequency that outputs maximum power in the resonance curve is called the resonance frequency ($f_0$).

In general, the cooktop 10 uses the frequency in the right area based on the resonance frequency ($f_0$) of the resonance curve. Additionally, the cooktop 1 may have a minimum and maximum operating frequency set in advance.

As an example, the cooktop 10 may operate at a frequency ranging from the maximum operating frequency ($f_{max}$) to the minimum operating frequency ($f_{min}$). That is, the operating frequency range of the cooktop 10 may be from the maximum operating frequency ($f_{max}$) to the minimum operating frequency ($f_{min}$).

As an example, the maximum operating frequency (fmax) may be the IGBT maximum switching frequency. The IGBT maximum switching frequency may refer to the maximum frequency that can be driven, considering the breakdown voltage and capacity of the IGBT switching element. For example, the maximum operating frequency ($f_{max}$) may be 75 kHz.

The minimum operating frequency ($f_{min}$) may be approximately 20 kHz. In this case, since the cooktop 10 does not operate at audible frequencies (approximately 16Hz to 20kHz), there is an effect of reducing noise from the cooktop 10.

Meanwhile, the setting values of the maximum operating frequency ($f_{max}$) and the minimum operating frequency ($f_{min}$) described above are only examples and are not limited thereto.

When the cooktop 10 receives a heating command, it can determine the operating frequency according to the heating power level set in the heating command. Specifically, the cooktop 10 can adjust the output power by lowering the operating frequency as the set heating power level becomes higher and increasing the operating frequency as the set heating power level becomes lower. That is, when the cooktop 10 receives a heating command, it can implement a heating mode that operates in any one of the operating frequency ranges according to the set heating power.

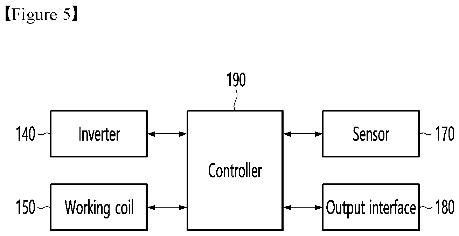

FIG. 5 is a control block diagram of an induction heating type cooktop according to an embodiment of the present disclosure.

The induction heating type cooktop 10 according to an embodiment of the present disclosure may include at least one of an inverter 140, a working coil 150, a sensor 170, an output interface 180, and a controller 190.

The inverter 140 can supply current to the working coil 150. The inverter 140 may convert the direct current power rectified by the rectifier 120 into alternating current power and supply it to the working coil 150. The inverter 140 may be formed in various shapes such as a half-bridge or full-bridge.

The working coil 150 can receive current from the inverter 140 and generate a magnetic field that passes through the cooking vessel 1.

The sensor 170 can detect temperature. The sensor 170 may be a temperature sensor for detecting the temperature of the cooking vessel 1. The sensor 170 is a sensor disposed at the top of the cooktop 10 and may be a top sensor.

The sensor 170 may be placed in the center of the working coil 150. The sensor 170 may be placed in direct or indirect contact with the upper plate part 11. The sensor 170 can detect the temperature of the cooking vessel 1 through the upper plate part 11. Specifically, since the heat of the cooking vessel 1 is transferred to the upper plate part 11, the sensor 170 can indirectly detect the temperature of the cooking vessel 1 by measuring the temperature of the upper plate part 11.

The output interface 180 may output information related to the operation of the cooktop 10. The output interface 170 may include an audio (not shown) for audibly outputting information related to the cooktop 10 or a display (not shown) for visually outputting information related to the cooktop 10.

The output interface 170 may output at least one of a boiling alarm indicating the occurrence of boiling in the cooking vessel 1 or an overheating alarm indicating overheating of the cooking vessel 1.

The controller 190 can control each component provided in the cooktop 10, such as the inverter 140, the working coil 150, the sensor 170, and the output interface 180.

The controller 190 can detect whether the cooking vessel 1 is boiling. Boiling of the cooking vessel 1 may mean boiling of water or food within the cooking vessel 1.

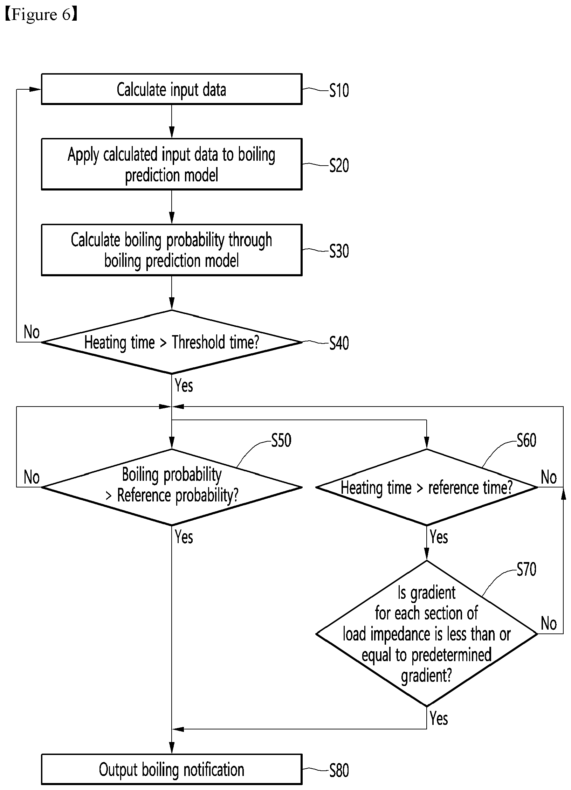

Next, with reference to FIG. 6, a method by which the controller 190 determines whether the cooking vessel 1 is boiling and outputs a boiling notification will be described.

Fig. 6 is a flow chart illustrating a method of determining whether a cooking vessel is boiling in an induction heating type cooktop according to an embodiment of the present disclosure.

The controller 190 can calculate input data (S10).

Input data may refer to data variables input into a deep neural network, which will be described later. The input data may include at least one of a temperature of the cooking vessel sensed by the sensor 170, an operating frequency of the inverter 140, and data related to load impedance.

For example, the controller 190 can obtain 10 pieces of data ($X_1$, $X_2$, ..., $X_{10}$) as input data (X), which can be as follows.

$X_1$ = $L_{eq}$ Delta Moving (change amount of $L_{eq}$, (maximum $L_{eq}$)-(minimum $L_{eq}$))

$X_2$ = $L_{eq}$ Gradient_60sec ($L_{eq}$ gradient from 0 to 60 seconds)

$X_3$ = $L_{eq}$ Gradient_120sec ($L_{eq}$ gradient from 60 to 120 seconds)

$X_4$ = $L_{eq}$ Gradient_180sec ($L_{eq}$ gradient from 120 to 180 seconds)

$X_5$ = $L_{eq}$ Gradient_240sec ($L_{eq}$ gradient from 180 to 240 seconds)

$X_6$ = $L_{eq}$ Local Gradient (Update $L_{eq}$ gradient every 50 seconds)

$X_7$ = Frequency Delta (change amount of Switching Frequency, (Maximum Switching Frequency)-(Minimum Switching Frequency))

$X_8$ = Frequency Gradient (Gradient of Switching Frequency from 0 to 60 seconds)

$X_9$ = TopSensor Delta (change amount of TopSensor, (TopSonsor maximum sensing value) - (TopSonsor minimum sensing value))

$X_{10}$ = TopSensor Gradient (TopSensor gradient from 0 to 60 seconds)

$X_1$ to $X_6$ may be data related to load impedance, $X_7$ to $X_8$ may be data related to the operating frequency of the inverter 140, and $X_9$ to $X_{10}$ may be data related to the temperature of the cooking vessel sensed by the sensor 170.

The controller 190 may acquire the temperature of the cooking vessel 1 through the sensor 170, and obtain the operating frequency (Switching Frequency) and load impedance through the sensing values of the inverter 140. The input data may be a derived variable using the sensing variable of the sensor (170) or inverter (140).

The controller 190 can apply the calculated input data to the boiling prediction model (S20).

The boiling prediction model can be implemented with a deep neural network (DNN). In this case, there is an advantage in that non-linear combinations between variables input to the boiling prediction model are easy.

The boiling prediction model may be a model learned to suit the goal through a preprocessing process after collecting inverter 140 parameters and water temperature data that appear according to various conditions.

The boiling prediction model can be learned and modeled through experimental data on numerous cooking vessels 1. The boiling prediction model is suitable for implementing a binary classification algorithm and may be suitable for processing large amounts of data considering the future expandability of cooking vessels 1.

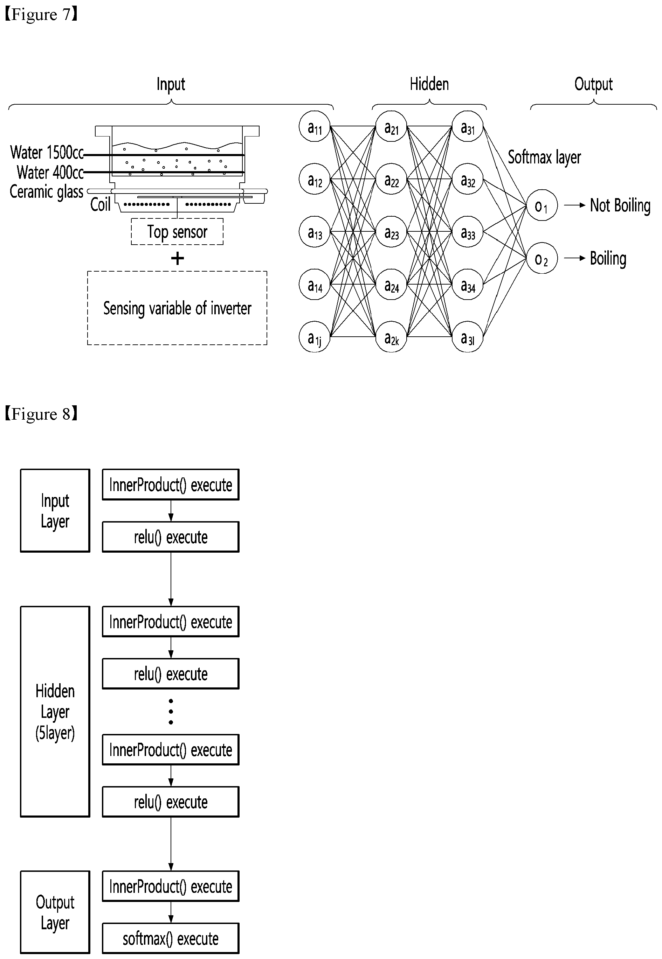

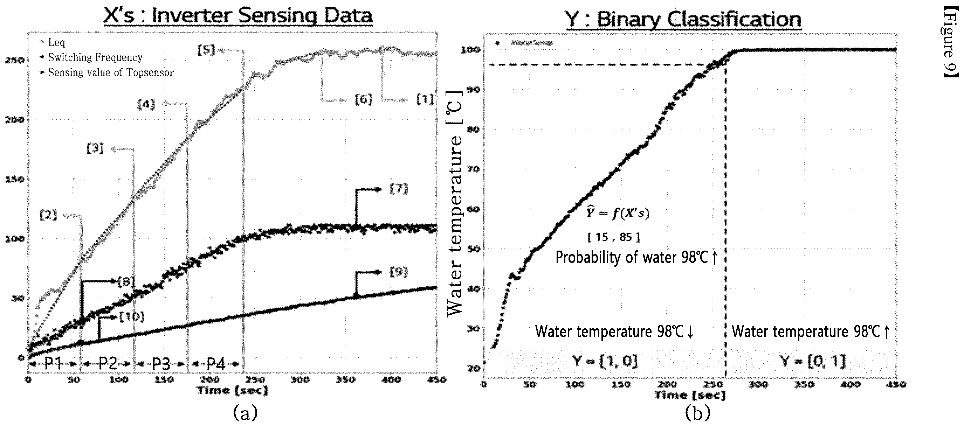

FIG. 7 is a schematic diagram of a boiling prediction model according to an embodiment of the present disclosure, FIG. 8 is a flowchart showing a method of operating a boiling prediction model according to an embodiment of the present disclosure, and FIG. 9 is a diagram illustrating an example of data used in a boiling prediction model according to an embodiment of the present disclosure.

As shown in FIG. 7, the boiling prediction model may consist of an input layer, a hidden layer, and an output layer. The input data calculated in step S10 may be input to the input layer. The hidden layer is the part of neural network learning that receives input data and calculates weights, and is the part where learning occurs by modifying the weights. The hidden layer may be composed of a plurality of layers, and in the example of the present disclosure, it may be composed of five layers. In the output layer, the boiling probability calculated in the hidden layer can be output.

In other words, the boiling prediction model may be a model learned as a result of experiments under multiple conditions for multiple cooking vessels 1. For example, it can be a model learned that boiling occurs when the temperature of the water is 95 to 99 °C while heating 300g to 1200g of water with heat power of 1 to 9 levels under the condition that the residual heat of the upper plate part 11 is 40°C or less, the temperature of the cooking vessel 1 is 40°C or less, the temperature of the water in the cooking vessel 1 is 30 °C or less for more than 700 clad cooking vessels with a bottom diameter of 130mm to 230mm. Accordingly, the boiling prediction model can calculate and output the boiling probability through input data calculated when the cooking vessel 1 is heated.

Fig. 8 shows various computational functions executed in the input layer, hidden layer, and output layer.

In (a) of Fig. 9, the load impedance ($L_{eq}$), the operating frequency of the inverter 140, and the temperature of the cooking vessel 1 detected by the sensor 170 while the cooking vessel 1 is heated, and input data from these can be obtained.

Meanwhile, the load impedance can be calculated through Equation 1 below.

【Equation 1】

$$\frac{1}{\omega}\sqrt{Z^2 - R_{eq}^2} + \frac{1}{\omega^2 C_{eq}}$$

In Equation 1 above, $W$ [rad/s] is $2\pi f$, and f may be the operating frequency. And, $Z$ [Ω] is

$$\sqrt{2} \cdot V_{in}/(\pi \cdot I_{rms})$$

, $R$ [Ω] is $P/I_{rms}^2$, $I_{rms}$ [A] is $I_{peak}/2$, $I_{peak}$ [A] is 0.0049* $I_{ADC}$+10.084 ,and $I_{ADC}$ is the current flowing through the working coil 150, may varying depending on the set heat power level or the type of cooking vessel 1. $C$ may be the capacitance of the resonant capacitor.

Meanwhile, Equation 1 is only an example. That is, the controller 190 may calculate the load impedance using a method other than Equation 1.

In (b) of Fig. 9, cases where boiling notification is output when the water temperature is 98°C or higher and cases where boiling notification is not output when the water temperature is less than 98°C are classified. It can be seen that the probability of boiling notification being output when the water temperature is 98°C or higher is 85%, and the probability that the boiling notification will not be output when the water temperature is above 98°C is 15%.

Again, Fig. 6 will be described.

The controller 190 can calculate the boiling probability through a boiling prediction model (S30).

The controller 190 can apply input data obtained from the sensor 170 and the inverter 140 to the boiling prediction model. The controller 190 can obtain the boiling probability output when input data is input to the boiling prediction model. When input data is input, the boiling prediction model can output the boiling probability according to it.

The controller 190 may determine whether the heating time exceeds a preset threshold time (S40).

Heating time may refer to the time from the start of heating of the cooking vessel 1 to the present. Heating time may be the time the inverter 140 operates.

Threshold time may refer to the minimum time required for a boiling prediction model to output a valid value. In other words, if the heating time is below the threshold time, the output from the boiling prediction model may not be the intended result. The threshold time may be 60 seconds, but since this is only an example, it is reasonable that it is not limited thereto.

The controller 190 can use a boiling prediction model when the heating time exceeds a preset threshold time.

If the heating time is less than the threshold time, the controller 190 can continuously calculate the input data and apply it to the boiling prediction model to calculate the boiling probability. That is, the controller 190 can continuously update the boiling probability if the heating time is below the threshold time.

The controller 190 may determine that the cooking vessel is in a boiling state if the boiling probability exceeds the reference probability or the gradient for each section of the load impedance is less than a predetermined gradient.

Accordingly, if the heating time exceeds the threshold time, the controller 190 may perform a first operation to determine whether the boiling probability exceeds the reference probability and a second operation to determine whether the gradient for each section of the load impedance is less than a predetermined gradient.

First, the first operation is explained. The controller 190 can determine whether the boiling probability exceeds the reference probability (S50).

Boiling probability can be an output value when input data is input to a boiling prediction model.

The reference probability may be a preset value considering reliability and accuracy. The reference probability may be 85 (%), but since this is only an example, it is reasonable not to be limited thereto.

The controller 190 can determine whether boiling occurs by comparing the boiling probability with a preset reference probability.

If the boiling probability is less than the reference probability, the controller 190 can continue to determine whether the boiling probability is greater than the reference probability. At this time, the controller 190 compares the updated boiling probability with the reference probability and can continue to compare the boiling probability with the reference probability until the boiling probability exceeds the reference probability.

If the boiling probability exceeds the reference probability, the controller 190 may output a boiling notification (S80).

That is, the controller 190 may determine that the cooking vessel 1 is boiling if the boiling probability exceeds the reference probability.

On the other hand, if the amount of water in the cooking vessel 1 is too small, boiling may occur before the boiling probability exceeds the reference probability. Accordingly, the controller 190 can perform the second operation together with the first operation. However, even if the amount of water is too small, it is difficult for boiling to occur within the preset reference time (about 3 minutes), so the second operation can be performed only when the heating time exceeds the reference time. If the heating time exceeds a preset reference time, the controller 190 can determine whether the cooking vessel is boiling using the load impedance.

The controller 190 may determine whether the heating time exceeds the reference time (S60).

The reference time may be 180 seconds (3 minutes), but since this is only an example, it is reasonable that it is not limited thereto.

If the heating time does not exceed the reference time, the controller 190 continues to perform the first operation and may determine whether the heating time exceeds the reference time. That is, if the heating time is less than or equal to the reference time, the controller 190 can determine boiling by comparing the boiling probability with a preset reference probability.

The controller 190 may perform a second operation when the heating time exceeds the reference time. If the heating time exceeds the reference time, the controller 190 may determine whether the gradient for each section of the load impedance is less than or equal to a predetermined gradient (S70).

The gradient for each section of the load impedance may be the gradient of the load impedance calculated every about 50 seconds. For example, in (a) of FIG. 9, there may be a load impedance gradient in the P1 section, a load impedance gradient in the P2 section, a load impedance gradient in the P3 section, and a load impedance gradient in the P4 section, but this is an example, it is reasonable that it is not limited to this.

The controller 190 may output a boiling notification if the gradient for each section of the load impedance is less than a predetermined gradient (S80).

If the heating time exceeds the reference time and the gradient for each section of the load impedance is less than a predetermined gradient, the controller 190 may determine that the cooking vessel 1 is boiling and output a boiling notification.

That is, the cooktop 10 according to an embodiment of the present disclosure can determine whether the cooking vessel 1 is boiling by applying input data obtained from the sensor 170 and the inverter 140 to a boiling prediction model.

In other words, the condition that the boiling probability exceeds the reference probability and the condition that the gradient for each section of the load impedance is less than a predetermined gradient may be an OR condition for boiling judgment.

The controller 190 may output a boiling notification through the output interface 180 when it is determined that the cooking vessel 1 is boiling.

The above description is merely an illustrative explanation of the technical idea of the present disclosure, and those skilled in the art will be able to make various modifications and variations without departing from the essential characteristics of the present disclosure.

Accordingly, the embodiments disclosed in the present disclosure are not intended to limit the technical idea of the present disclosure but are for illustrative purposes, and the scope of the technical idea of the present disclosure is not limited by these embodiments.

The scope of protection of this disclosure should be interpreted in accordance with the claims below, and all technical ideas within the equivalent scope should be interpreted as being included in the scope of rights of this disclosure.

**Claims**

1. An induction heating type cooktop comprising:

   an upper plate part on which a cooking vessel is placed;
   a working coil configured to generate a magnetic field passing through the cooking vessel;
   an inverter configured to supply current to the working coil;
   a sensor configured to detect a temperature of the cooking vessel; and
   a controller configured to determine whether the cooking vessel is boiling,
   wherein the controller is configured to determine whether the cooking vessel is boiling by applying input data obtained from the sensor and the inverter to a boiling prediction model.

2. The induction heating type cooktop according to claim 1, wherein the boiling prediction model is implemented with a Deep Neural Network (DNN).

3. The induction heating type cooktop according to claim 1, wherein the controller is configured to use the boiling prediction model when a heating time exceeds a preset threshold time.

4. The induction heating type cooktop according to claim 1, wherein the controller is configured to obtain a boiling probability output when the input data is input to the boiling prediction model.

5. The induction heating type cooktop according to claim 4, wherein the controller is configured to determine whether the cooking vessel is boiling by comparing the boiling probability with a preset reference probability.

6. The induction heating type cooktop according to claim 5, wherein the controller is configured to output a boiling notification of the cooking vessel if the boiling probability exceeds the reference probability.

7. The induction heating type cooktop according to claim 1, wherein the controller is configured to determine whether the cooking vessel is boiling using load impedance if a heating time exceeds a preset reference time.

8. The induction heating type cooktop according to claim 7, wherein the controller is configured to output a boiling notification of the cooking vessel if the heating time exceeds the reference time and a gradient for each section of the load impedance is less than a predetermined gradient.

9. The induction heating type cooktop according to claim 7, wherein the controller is configured to determine whether the cooking vessel is boiling by comparing the boiling probability with a preset reference probability if the heating time is less than the reference time.

10. The induction heating type cooktop according to claim 1, wherein the input data includes a temperature of the cooking vessel sensed by the sensor, an operating frequency of the inverter, and data related to load impedance.

11. The induction heating type cooktop according to claim 1, further comprising an output interface configured to output a notification when it is determined that the cooking vessel is boiling.

【Figure 1】

【Figure 2】

【Figure 3】

【Figure 4】

【Figure 5】

【Figure 6】

```
            ┌─────────────────────────────┐
        ┌──▶│      Calculate input data    │──── S10
        │   └─────────────────────────────┘
        │                 │
        │                 ▼
        │   ┌─────────────────────────────┐
        │   │  Apply calculated input data │──── S20
        │   │    to boiling prediction model│
        │   └─────────────────────────────┘
        │                 │
        │                 ▼
        │   ┌─────────────────────────────┐
        │   │ Calculate boiling probability│──── S30
        │   │ through boiling prediction    │
        │   │           model               │
        │   └─────────────────────────────┘
        │                 │
   No   │                 ▼
        └──◇ Heating time > Threshold time? ◇──── S40
                          │
                         Yes
```

Boiling probability > Reference probability? — S50

Heating time > reference time? — S60

Is gradient for each section of load impedance is less than or equal to predetermined gradient? — S70

Output boiling notification — S80

【Figure 7】

【Figure 8】

【Figure 9】

**EP 4 456 669 A1**

## INTERNATIONAL SEARCH REPORT

International application No.

**PCT/KR2022/017196**

### A. CLASSIFICATION OF SUBJECT MATTER

**H05B 6/12**(2006.01)i; **H05B 6/06**(2006.01)i; **G06N 3/04**(2006.01)i

According to International Patent Classification (IPC) or to both national classification and IPC

### B. FIELDS SEARCHED

Minimum documentation searched (classification system followed by classification symbols)

H05B 6/12(2006.01); F24C 15/10(2006.01); F24C 3/12(2006.01); F24C 7/08(2006.01); H05B 6/04(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유도가열(inductive heat), 쿡탑(cook-top), 심층 신경망(DNN, Deep Neural Network), 끓음(boil), 예측(predict), 모델(model), 판단(determine), 인버터(inverter), 온도센서(temperature sensor)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0008786 A (LG ELECTRONICS INC.) 25 January 2021 (2021-01-25)<br>See paragraphs [0144]-[0376]; claims 1 and 4; and figures 4-5 and 11-12. | 1-6,11 |
| A | | 7-10 |
| Y | KR 10-2018-0092183 A (LG ELECTRONICS INC.) 17 August 2018 (2018-08-17)<br>See claims 1-3. | 1-6,11 |
| A | US 2009-0173731 A1 (NAGAMITSU, Sachio et al.) 09 July 2009 (2009-07-09)<br>See paragraphs [0068]-[0097]; and figures 5 and 7. | 1-11 |
| A | KR 10-2021-0066452 A (LG ELECTRONICS INC.) 07 June 2021 (2021-06-07)<br>See claims 1-7; and figure 6. | 1-11 |
| A | KR 20-0179852 Y1 (LEE, Geum Suk) 15 April 2000 (2000-04-15)<br>See claims 1-4. | 1-11 |

☐ Further documents are listed in the continuation of Box C.　　☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **28 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

16

| Patent document cited in search report | | | Publication date (day/month/year) | Patent family member(s) | | | Publication date (day/month/year) |
|---|---|---|---|---|---|---|---|
| KR | 10-2021-0008786 | A | 25 January 2021 | CN | 112512391 | A | 16 March 2021 |
| | | | | EP | 3785581 | A1 | 03 March 2021 |
| | | | | EP | 3785581 | A4 | 23 June 2021 |
| | | | | US | 2021-0338007 | A1 | 04 November 2021 |
| | | | | WO | 2021-010509 | A1 | 21 January 2021 |
| KR | 10-2018-0092183 | A | 17 August 2018 | KR | 10-1938217 | B1 | 15 January 2019 |
| US | 2009-0173731 | A1 | 09 July 2009 | CN | 101438621 | A | 20 May 2009 |
| | | | | CN | 101438621 | B | 21 September 2011 |
| | | | | EP | 2020826 | A1 | 04 February 2009 |
| | | | | EP | 2020826 | A4 | 07 December 2011 |
| | | | | EP | 2020826 | B1 | 27 March 2013 |
| | | | | JP | 2009-132674 | A1 | 24 September 2009 |
| | | | | JP | 5043833 | B2 | 10 October 2012 |
| | | | | US | 8791399 | B2 | 29 July 2014 |
| | | | | WO | 2007-132674 | A1 | 22 November 2007 |
| KR | 10-2021-0066452 | A | 07 June 2021 | US | 2021-0161329 | A1 | 03 June 2021 |
| KR | 20-0179852 | Y1 | 15 April 2000 | None | | | |

Form PCT/ISA/210 (patent family annex) (July 2022)